# FASCICULE DE BREVET EUROPEEN

(11) **EP 0 581 646 B1**
(45) Date de publication et mention de la délivrance du brevet: **03.01.1996**
(21) Numéro de dépôt: 93401890.4
(22) Date de dépôt: 21.07.1993
(51) Int. Cl.: B60N 2/44, A47C 7/02

(54) **Coussin pour siège à surface portante réglable et son application à un siège d'automobile**
Kissen für einen Sitz mit verstellbarer Sitzfläche und Anwendung bei einem Fahrzeugsitz
Cushion for an adjustable seat and for use in a vehicle seat

(30) Priorité: 30.07.1992 FR 9209461
(43) Date de publication de la demande: 02.02.1994
(73) Titulaire: CESA COMPAGNIE EUROPEENNE DE SIEGES POUR AUTOMOBILES, F-92307 Levallois-Perret Cédex (FR)
(72) Inventeur: Fourrey. François, F-25200 Montbeliard (FR); Baret, Frédéric, F-45200 Montargis (FR)
(74) Mandataire: Polus, Camille

(56) Documents cités:
- US-A- 3 600 037
- US-A- 4 664 444

## Description

La présente invention concerne les coussins pour siège et, notamment, pour siège de véhicules automobiles terrestres, qui présentent une surface portante réglable à volonté selon les souhaits de l'occupant.

Il est bien connu que les dimensions d'un siège, chaise, fauteuil , canapé par exemple, sont adaptées à la morphologie moyenne d'une population déterminée d'individus destinés à les utiliser, ces moyenne et population s'entendant au sens statistique des termes. Il s'ensuit que des sièges conçus et fabriqués dans ces conditions ne conviennent pas lorsque l'occupant a une morphologie qui s'écarte notablement de la moyenne.

Des difficultés se rencontrent en particulier avec l'assise d'un siège lorsque son occupant a des jambes dont les cuisses sont longues ou courtes et lorsque cet occupant veut se "caler" dans le fond du siège, en appuyant confortablement son dos contre le dossier. En effet, si l'occupant a des cuisses relativement courtes et qu'il s'assoie sur le siège en faisant en sorte que le pli intérieur du genou ou creux poplité repose contre le bord antérieur de l'assise, il ne peut pas appliquer la totalité de son dos contre le dossier. Inversement, si l'occupant a des cuisses relativement longues et qu'il se cale dans le fond du siège, la partie antérieure de la face postérieure de ses cuisses qui se trouve située entre le creux poplité et le bord antérieur de l'assise n'est plus soutenue par l'assise.

Ce type de difficultés se rencontre par exemple pour les sièges de véhicules automobiles terrestres. Si ces sièges dont au moins celui destiné au conducteur, sont rendus mobiles en translation à l'aide de glissières parallèles à l'axe longitudinal médian du véhicule afin que l'utilisateur puisse adapter sa position en fonction à sa morphologie et/ou à son style de conduite, relativement à la configuration du poste de pilotage et à la géométrie du siège et à son état d'usure, ils ne résolvent aucunement le problème de l'adaptation de l'aire de la surface portante de l'assise du siège relativement à la morphologie, en particulier des cuisses, de l'occupant.

Une tentative de solution à ce problème est exposée dans le document FR-A-2 604 130.

Selon ce document, l'assise du siège, au moins dans sa zone médiane, est divisée en éléments ou tronçons transversaux qui sont mobiles relativement les uns aux autres et qui délimitent entre eux des intervalles de dimensions réglables, et des moyens tels que des boudins ou sacs étanches gonflables sont disposés dans les intervalles entre les éléments. En adaptant l'état du gonflage de ces boudins à l'écart donné aux éléments dont l'extension longitudinale est fixée en fonction de la morphologie de l'occupant, on comble tant bien que mal les intervalles pour essayer de rétablir la continuité de la surface portante de l'assise qui est morcelée et divisée par les intervalles de largeur variable selon l'extension. Cette solution est compliquée, délicate à mettre en oeuvre et donc coûteuse à construire et à entretenir.

Une autre solution est divulguée par le document FR-A-2 053 732.

Selon ce document, des moyens de blocages spéciaux sont disposés entre la partie mobile du coussin et son ossature pour assurer l'immobilisation de la partie mobile dans la position où elle a été placée.

Une autre solution est illustrée par le document US-A-3 600 037.

Le but de l'invention est de construire un coussin pour siège dont la surface portante est modulable en fonction de la morphologie d'une partie du corps de l'occupant et qui ne présente pas les inconvénients précités.

L'invention a pour objet un coussin pour siège dont tous les éléments nécessaires à l'invention qui sont aussi présents dans le document US indiqué auparavant, sont énoncés dans le préambule de la revendication 1 et dont les particularités distinctives figurent notamment dans la partie caractérisante de celle-ci.

L'invention a aussi pour objet l'application d'un tel coussin à un siège pour véhicules automobiles terrestres, en particulier pour la confection de l'assise d'un tel siège.

D'autres caractéristiques de l'invention ressortiront de la lecture de la description et des revendications qui suivent ainsi que de l'examen du dessin annexé, donné seulement à titre d'exemple, où :
- la Figure 1 est une coupe longitudinale partielle et schématique d'un mode de réalisation d'un coussin pour siège selon l'invention;
- la Figure 2 est une demi-vue du mode de réalisation de la Figure 1 représentant ce coussin regardé de l'avant;
- les Figures 3 et 4 sont des vues analogues à celle de la Figure 1, de variantes d'exécution d'un autre mode de réalisation;
- la Figure 5 est une vue partielle schématique analogue à celle de la Figure 2, d'un autre mode de réalisation;
- les Figures 6 et 7 sont, respectivement, une vue de côté et une vue de dessus de deux variantes d'exécution d'autres modes de réalisation;
- les Figures 8, 9 et 10 sont des vues différentes illustrant diverses applications d'un coussin pour siège selon l'invention; et
- la Figure 11 illustre schématiquement sur ses vues A, B et C le mode de réalisation de la Figure 1 dans trois positions différentes.

Les coussin pour siège et en particulier pour siège pour véhicules automobiles terrestres étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un coussin pour siège selon l'invention avant d'en décrire au besoin la fabrication, l'assemblage et le fonctionnement.

Pour la facilité de l'exposé, on décrira un coussin pour siège selon l'invention dans son application à un siège pour véhicules automobiles terrestres. Il est clair que l'invention n'est pas limitée à cette application particulière.

Comme on le sait, un siège étant en pratique symétrique le plus souvent par rapport à un plan médian vertical, il suffira donc de se placer dans ce plan ou bien de décrire et/ou représenter l'un des côtés du siège selon l'invention, que ce soit le côté droit ou le côté gauche.

Comme on le voit, un coussin pour siège est équipé selon l'invention d'une partie mobile ou dispositif pour régler à volonté l'aire de la surface portante sans produire de solution de continuité pratiquement perceptible de cette surface.

Le coussin 10 comprend une partie fixe avec une ossature 11, par exemple métallique obtenue à partir de tubes, barres, flans de tôle, par exemple travaillés selon des techniques traditionnelles, et une garniture 12 faite d'un rembourrage 121 interne et d'un revêtement 122 externe. Le rembourrage 121 est, par exemple, fait d'une ou plusieurs mousses en matériaux synthétiques similaires ou différents par exemple en couches ou strates superposées et présentent, s'il y a lieu, des élasticités et consistances différentes. Le revêtement externe 122 est fait de tout matériau convenable, s'il y a lieu, rapporté sur le rembourrage ou faisant corps avec ce dernier, et est obtenu selon des techniques de fabrication traditionnelles. Lorsque ce revêtement 122 ne fait pas corps avec le rembourrage 121, il peut par exemple se présenter sous la forme d'un tissu qui présente une certaine élasticité, au moins longitudinale, de manière à pouvoir s'étirer pour les raisons que l'on comprendra. Ce coussin 10 présente une surface portante 13 destinée à recevoir une partie du corps d'un occupant, par exemple ses cuisses et ses fesses ou son dos.

S'il y a lieu la surface portante proprement dite est bordée, de part et d'autre, de bourrelets 14 ou analogues destinés à éviter tout glissement latéral de l'occupant hors du siège. Ces bourrelets sont fixes, amovibles ou réglables comme il est connu.

Comme on le voit, la partie mobile ou dispositif 20 d'un coussin pour siège perfectionné selon l'invention, comprend entre autres un traversin 21,un support 23 et des moyens d'immobilisation 24. Un évidement 22 est ménagé dans la partie fixe pour recevoir ce traversin.

Le traversin ou polochon 21 est mobile et est monté basculant selon un axe Δ qui est, de préférence, perpendiculaire au plan médian dont il a été question auparavant. Ce traversin 21 est constitué essentiellement d'un squelette 211 et d'une garniture 212. Cette garniture 212 est faite d'une matelassure 2120 interne et d'un habillage 2121 externe avec au moins une surface 2122 extérieure courbe et convexe par rapport à cet axe Δ. Des tranches d'extrémité 2123 approximativement perpendiculaires à cet axe Δ, sont séparées par une distance D et délimitent transversalement le traversin 21. Ce qui a été indiqué à propos de l'ossature et de la garniture du coussin vaut aussi pour le squelette et la garniture du traversin.

L'évidement ou logement 22 est ménagé dans la garniture 12 de manière à présenter une cavité 221 destinée à recevoir, au moins partiellement, le traversin 21 comme cela ressortira de la description qui suit. Cette cavité présente une surface 2211 intérieure courbe et concave par rapport à l'axe Δ et qui est complémentaire de cette surface extérieure 2122 et située en vis-à-vis de celle-ci. S'il y a lieu des parois d'extrémité 2212 approximativement perpendiculaires à cet axe Δ délimitent transversalement la cavité 221. De préférence, ces tranches et parois sont parallèles et en regard, par exemple localement à proximité de cet axe.

Le support 23 relie l'ossature 11 et le squelette 211 et présente au moins une articulation avec un palier 231 et un tourillon 232 qui, ensemble, définissent l'axe Δ. De préférence, des palier et tourillon, similaires ou non, sont disposés de part et d'autre du traversin. Ce support permet au traversin 21 de basculer relativement à l'axe Δ afin de s'escamoter, au moins partiellement, dans la cavité 211 ou bien d'en sortir plus ou moins, pour les raisons que l'on comprendra par la suite.

Les moyens d'immobilisation 24 sont associés à ces parties fixe et mobile et sont destinés à maintenir le traversin 21 dans la position où il a été placé relativement à la partie fixe du coussin.

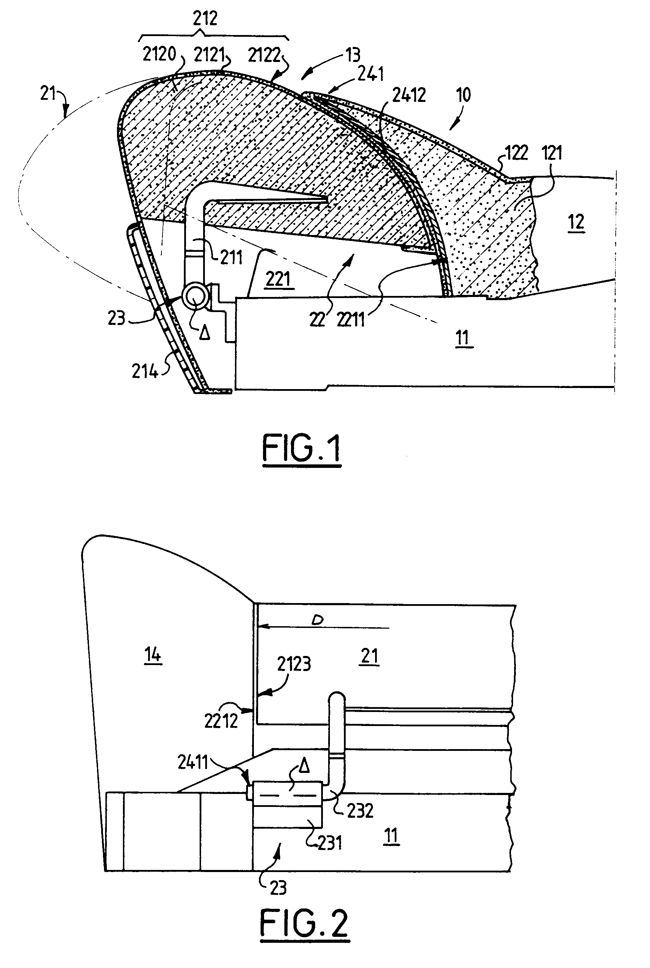

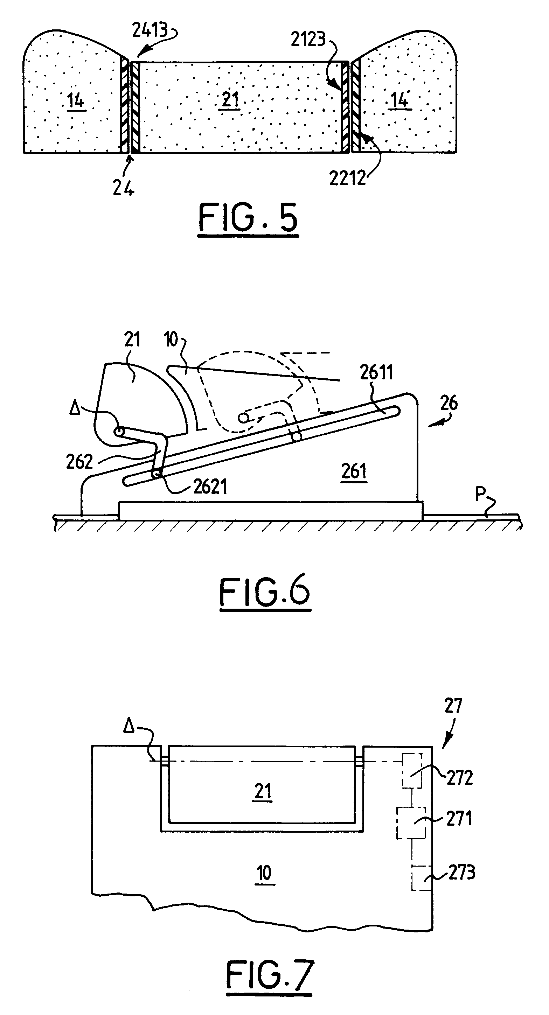

Les moyens d'immobilisation 24 comprennent par exemple, des organes de friction 241 comme on le verra par la suite qui (2412) sont constitués par l'une au moins de ces surfaces courbes extérieure 2122 et intérieure 2211 en vis-a-vis (Figure 1); d'autres moyens d'immobilisation peuvent (2411) être situés sur l'un au moins de ces palier 231 et tourillon 232 (Figure 2), ou bien voire même (2413) placés sur l'un au moins des couples tranche 2123-paroi 2211 en regard de la garniture 212 et de la cavité 221 (Figure 5).

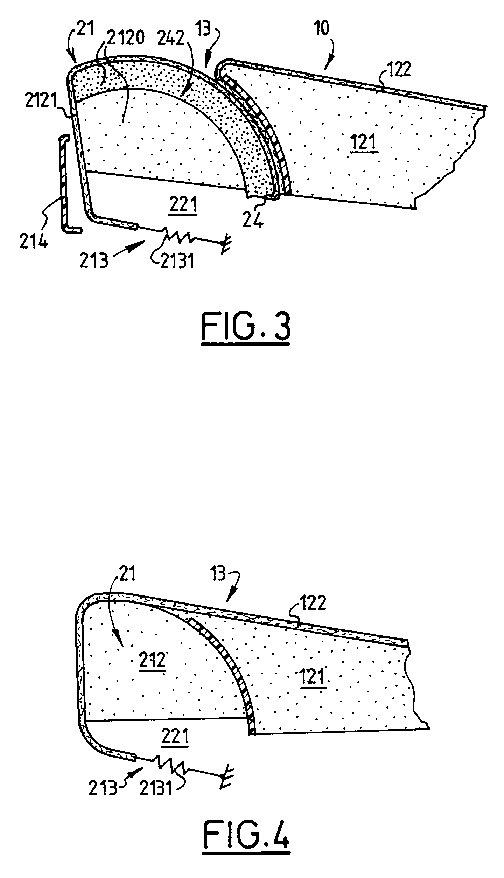

Selon un autre mode de réalisation, les moyens d'immobilisation 24 comprennent des éléments 242 compressibles qui sont par exemple constitués pour partie par le rembourrage 121 de la garniture 12 du coussin 10 ou par la matelassure 2120 du traversin 21 (Figure 3). Ces moyens sont donc associés à l'une de ces surfaces courbes 2122, 2211 en regard.

Pour les raisons que l'on comprendra par la suite, que le revêtement 122 du coussin 10 et l'habillage 2121 du traversin 21 soient d'un seul tenant (Figure 4) ou distincts (Figure 3) selon les modes de réalisation, ils sont soumis de préférence à une sollicitation élastique qui est exercée directement par la nature elle-même du revêtement ou de l'habillage qui présente des propriétés élastiques inhérentes au moins unidirectionnelles dans le sens longitudinal, ou bien à l'aide d'un tendeur 2131 comme illustré schématiquement (Figures 3, 4).

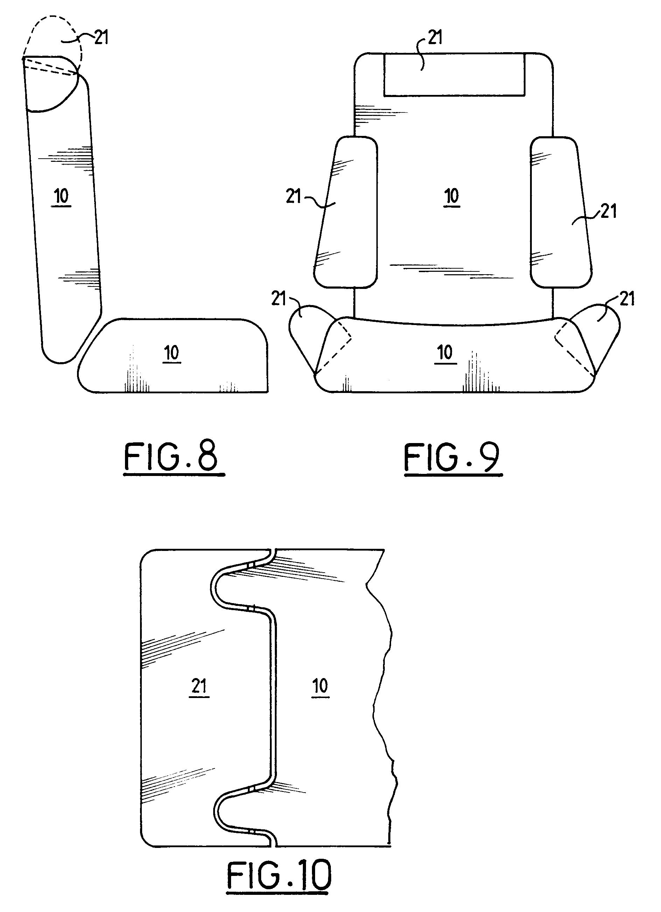

Comme on le voit sur les diverses figures, un tel coussin perfectionné convient particulièrement bien pour l'assise d'un siège auquel cas le traversin équipe au moins la partie médiane, repérée transversalement, du bord antérieur de l'assise (Figures 2, 5, 7) ou, au besoin la totalité de la largeur, repérée transversalement, du bord antérieur de ce siège (Figure 10).

Il est clair qu'un tel coussin perfectionné avec son traversin peut aussi être utilisé pour les bourrelets latéraux que ceux-ci soient ceux de l'assise et/ou du dossier (Figure 9), voire celui d'un repose-tête (Figures 8, 9).

Lorsqu'un coussin perfectionné selon l'invention est utilisé pour l'assise d'un siège d'automobile qui est monté mobile longitudinalement en translation sur le plancher d'un véhicule, parallèlement au plan de l'axe médian dont il a été question précédemment, le dispositif selon l'invention peut être équipé d'un asservissement 26 par exemple mécanique ou électrique qui assure le déplacement par basculement du traversin en fonction de la position longitudinale de l'assise sur le plancher du véhicule.

Un tel asservissement peut être assuré par exemple mécaniquement à l'aide d'une came-contre-came. Cet asservissement comprend par exemple un flasque 261 fixe, solidaire directement ou indirectement du plancher du véhicule dans lequel est découpée une came par exemple en forme de fente ou lumière 2611 inclinée et d'un levier 262 qui est solidaire ou calé sur l'arbre du tourillon 232 et qui est muni d'un téton-doigt 2621 qui tient lieu de contre-came et qui est maintenu contre la came (Figure 6).

Cet asservissement peut être aussi obtenu à l'aide d'une motorisation 27 alimentée par la batterie ou accumulateur, non illustré, du véhicule qui comprend par exemple un moteur 271, un réducteur 272, un commutateur-inverseur 273. Il est clair que dans le cas d'un asservissement électrique motorisé, le pilotage peut s'effectuer à l'aide d'un micro-calculateur dans la mémoire duquel ont été introduits les paramètres de réglage qui correspondent à ceux souhaités par chacun des utilisateurs particuliers (Figure 9).

Le fonctionnement d'un coussin perfectionné selon l'invention est le suivant.

On décrira le fonctionnement pour le mode de réalisation illustré sur la Figure 1 et en supposant que le traversin occupe initialement la position où il est illustré, c'est-à-dire escamoté le plus possible, partiellement dans la cavité du coussin.

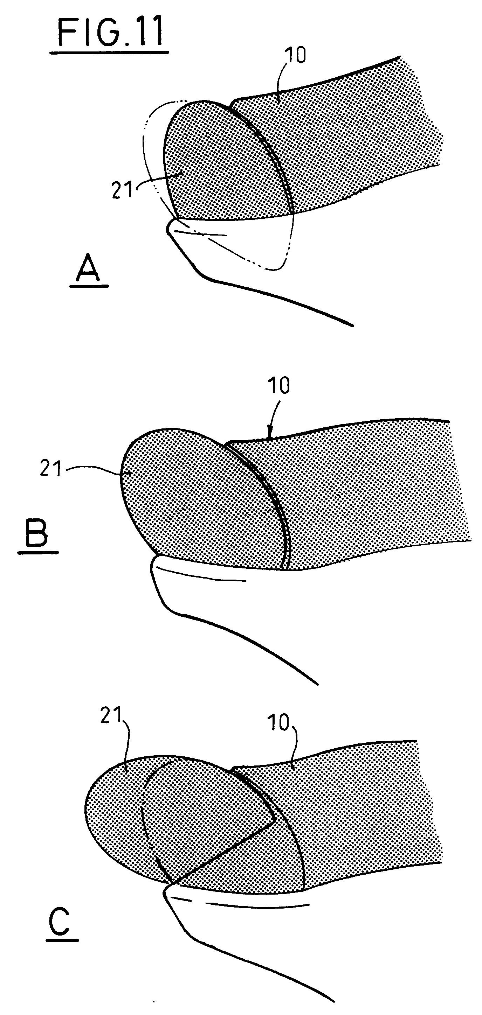

Si un utilisateur à longues cuisses veut être assis confortablement en faisant en sorte que la face postérieure de ses cuisses proches du creux poplité soit supportée, il saisit le traversin directement ou il se saisit de la commande pour vaincre les moyens d'immobilisation et il place le traversin dans la position qui lui convient. Sur la Figure 1, seule la position d'extension maximale a été illustrée en trait discontinu sans que les diverses positions de réglage, continu ou discontinu, intermédiaires possibles aient été représentées pour ne pas surcharger le dessin. La Figure 11 sur ses vues A, B, et C illustre le mode de réalisation de la Figure 1 dans trois positions différentes.

En examinant la figure du dessin, on voit immédiatement que les géométries courbes concave et convexe en vis-à-vis de préférence à section droite non circulaire, et s'il y a lieu par exemple localement coaxiales et centrées sur l'axe Δ, données respectivement à la garniture du traversin et à la cavité de l'évidement du coussin permettent d'avoir une surface portante évolutive à volonté sans qu'il y ait pratiquement de solution de continuité perceptible à la jonction à l'endroit où la partie du traversin initialement escamotée dans la cavité du coussin se déploie. Cette jonction apparaît tout au plus à la manière des coutures souvent présentes sur les coussins aux raccordements des habillages ou revêtements faits de matériaux différents.

Lorsqu'on utilise des moyens d'immobilisation qui se présentent sous la forme d'organes de friction ou d'organes de compression, voire les deux simultanément, le réglage est progressif et continu. Le coefficient de frottement relatif entre les deux surfaces ou les tranche-paroi en vis-à-vis, au besoin en contact, est facile à obtenir de par le choix de la nature et des états de surface en présence et au contact ou de même que par le choix de la souplesse et du taux de compression des matériaux dont sont faits les rembourrage et matelassure.

Le maintien dans la position choisie est assuré par le simple frottement des surfaces en vis-à-vis, par exemple tissu contre tissu ou bien tissu contre cuir ou contre d'autres matériaux. On observera que le frottement est accentué par l'effort de pesée verticale des cuisses et, s'il y a lieu, par la forme non cylindrique des deux surfaces.

Le choix des coefficients de frottement est aussi adapté aux courbes utilisées de manière que les efforts exercés par les cuisses de l'utilisateur reposant sur le coussin et sur le traversin soient appliqués de telle sorte que, dans toute la mesure du possible, la résultante des efforts passe par l'axe Δ afin que le traversin ne soit soumis à aucun couple qui tende à en modifier la position par basculement, dans un sens ou dans l'autre.

Il y a lieu de noter que l'on peut utiliser simultanément ou au choix selon diverses associations, des organes de friction au niveau des surfaces en vis-à-vis, au niveau des tranches-paroi en vis-à-vis, ou au niveau du palier-tourillon. De même, ces organes de friction peuvent être associés ou non aux organes de compression.

La matelassure interne de la garniture du traversin est, par exemple, faite de deux mousses de "portances" ou consistances propres différentes. La mousse intérieure est plus "dure" pour conserver sa géométrie et faciliter la préhension. La mousse extérieure, de préférence à la partie supérieure est plus "molle" pour répartir au mieux la pression des cuisses au voisinage du creux poplité et obtenir aussi un soutien confortable sans fatigue. On observera que la déformation sous charge de cette mousse extérieure "molle" augmente en outre la longueur de l'appui tout en apportant un effet bénéfique pour la maintien en position.

On observera que l'adoption d'une géométrie courbe non circulaire en particulier pour la partie convexe de la garniture du traversin, confère un avantage notable à l'invention. En effet, les occupants de grande taille qui doivent augmenter la longueur de l'assise ont aussi intérêt à en surélever un peu la partie antérieure, résultat qui est obtenu en particulier par la configuration illustrée sur la Figure 1. On donne alors au rembourrage 121, de préférence en mousse, et à la surface 2211 la souplesse convenable, comme il est connu. On notera que pour la position d'extension maximale, la surélévation du traversin augmente encore le frottement mutuel de celui-ci et de l'évidement, ce qui favorise le maintien en position.

A titre de moyens d'immobilisation, on peut se servir de disques ou secteurs placés en vis-à-vis, en tout ou partie, et fixés ou faisant corps sur ces tranches et parois, qui présentent les uns des alvéoles et les autres des protubérances correspondantes, disposés en arc de cercle et centrés sur l'axe Δ. Ces alvéoles et protubérances sont engagés les uns dans les autres et peuvent s'échapper par déformation élastique lorsqu'on force sur le traversin dans un sens ou dans l'autre pour le changer de position en le faisant basculer.

S'il y a lieu, un tablier ou panneau 214 protecteur est monté au besoin mobile à l'avant du traversin.

Pour le mode de réalisation de la Figure 1 par exemple, un basculement d'environ un quart de tour du traversin permet d'allonger ou de raccourcir la surface portante d'environ 80 mm.

La description et le dessin auquel elle se réfère montrent tout l'intérêt et tous les avantages apportés par la solution selon l'invention. En particulier, on observera que la solution selon l'invention n'altère pas l'esthétique du siège, ne nuit pas au confort mais l'améliore, permet un réglage autonome et immédiat de l'aire de la surface portante et cela entre des limites importantes sans contraindre à une retouche éventuelle des autres réglages du siège, et tout cela, à un coût modique et avec une aptitude à la production en série.

## Revendications

1. Coussin (10) pour siège présentant une surface portante (13) réglable et constitué, entre autres, d'une partie fixe et d'une partie mobile, dans lequel cette partie mobile (21) longiligne est montée basculante selon un axe (Δ) qui lui est longitudinal et présente une garniture (212) avec au moins une surface (2122) extérieure courbe et convexe par rapport à cet axe (Δ), cette partie fixe présente un évidement (22) destiné à recevoir au moins partiellement cette partie mobile (21) et muni d'une surface (2211) intérieure courbe et concave par rapport à cet axe (Δ) qui est complémentaire de cette surface extérieure (2122) et qui est située en vis-à-vis de celle-ci, un support (23) reliant cette partie fixe et cette partie mobile avec au moins une articulation qui définit cet axe (Δ) et des moyens d'immobilisation (24) qui comprennent des organes de friction (241) pour maintenir cette partie mobile (21) dans la position où elle a été placée relativement à cette partie fixe, coussin caractérisé en ce que cette partie mobile (21) est partiellement escamotable dans cet évidement (22), en ce que ces moyens d'immobilisation (24) sont constitués par ces surfaces courbes (2121, 2211) extérieure et intérieure en vis-à-vis et en ce que cet axe (Δ) est situé de manière que lorsque le coussin reçoit un occupant, les efforts développés présentent une résultante qui passe pratiquement par l'axe (Δ).

2. Coussin selon la revendication 1, où cette partie mobile (21) présente une garniture (212) avec des tranches (2123) d'extrémité qui sont perpendiculaires à cet axe (Δ), et où cet évidement (22) présente une cavité (221) qui est munie de parois (2212) d'extrémité qui sont parallèles à ces tranches (2123) et qui sont placées en regard de celles-ci et caractérisé en ce que ces organes de frictions (241, 2413) sont situés en outre sur l'un au moins de ces couples tranche-paroi (2123, 2212) en regard.

3. Coussin selon l'une quelconque des revendications 1 et 2, caractérisé en ce que ces moyens d'immobilisation (24) comprennent des éléments (242) compressibles.

4. Coussin selon la revendication 3, caractérisé en ce que ces éléments compressibles (242) sont au moins pour partie une matelassure (2120) de la partie mobile (21).

5. Coussin selon l'une quelconque des revendications 1 à 4, caractérisé en ce que ce qu'au moins un habillage (2121) de cette partie mobile (21) est soumis à une sollicitation élastique (213).

6. Coussin selon l'une quelconque des revendications 1 à 5, caractérisé en ce qu'un revêtement (122) du coussin (10) et un habillage (2121) de la partie mobile (21) sont tous deux soumis à une sollicitation élastique (213).

7. Coussin selon l'une quelconque des revendications 5 et 6, caractérisé en ce que cette sollicitation élastique (2132) est exercée par un tendeur (2131).

8. Coussin selon l'une quelconque des revendications 6 et 7, caractérisé en ce que cette sollicitation élastique (213) est inhérente à l'un de ces revêtement (122) et habillage (2121).

9. Application d'un coussin selon l'une quelconque des revendications 1 à 8, notamment à l'assise d'un siège de véhicule automobile terrestre.

10. Application selon la revendication 9, caractérisé en ce que ce siège est monté mobile longitudinalement en translation, en ce que le basculement de la partie mobile (21) relativement à cet axe (Δ) est orthogonal à cette translation et asservi à cette translation.

11. Application selon la revendication 10, caractérisé en ce que cet asservissement est mécanique.

12. Application selon la revendication 11, caractérisé en ce que cet asservissement est électrique.

## Claims

1. Cushion (10) for a seat having an adjustable bearing surface (13) and consisting, amongst other things, of a fixed part and a movable part, in which this long movable part (21) is mounted so as to tilt with respect to an axis (Δ) which is longitudinal thereto and has trim (212) with at least one external surface (2122) which is curved and convex with respect to this axis (Δ), this fixed part has a recess (22) designed to receive this movable part (21) at least partially and provided with an internal surface (2211), curved and concave with respect to this axis (Δ), which is complementary to this external surface (2122) and which is situated facing it, a support (23) connecting this fixed part and this movable part with at least one pivot defining this axis (Δ) and immobilisation means (24) which comprise friction members (241) to keep this movable part (21) in the position in which it has been placed relative to this fixed part, a cushion characterised in that this movable part (21) is partially retractable into this recess (22), in that these immobilisation means (24) consist of external and internal curved surfaces (2121, 2211) facing each other and in that this axis (Δ) is situated in such a manner that, when the cushion receives an occupant, the forces developed have a resultant which passes substantially through the axis (Δ).

2. Cushion according to Claim 1, in which this movable part (21) has trim (212) with end sections (2123) which are perpendicular to this axis (Δ), and in which this recess (22) has a cavity (221) which is provided with end walls (2212) which are parallel to these sections (2123) and which are placed opposite them and characterised in that these friction members (241, 2413) are moreover situated on at least one of these mutually opposite section/wall pairs (2123, 2212).

3. Cushion according to either one of Claims 1 and 2, characterised in that these immobilisation means (24) comprise compressible elements (242).

4. Cushion according to Claim 3, characterised in that these compressible elements (242) are at least in part a padding (2120) on the movable part (21).

5. Cushion according to any one of Claims 1 to 4, characterised in that at least one covering (2121) on this movable part (21) is subjected to an elastic stress (213).

6. Cushion according to any one of Claims 1 to 5, characterised in that a facing (122) on the cushion (10) and a covering (2121) on the movable part (21) are both subjected to an elastic stress (213).

7. Cushion according to either one of Claims 5 and 6, characterised in that this elastic stress (2132) is exerted by a tensioning device (2131).

8. Cushion according to either one of Claims 6 and 7, characterised in that this elastic stress (213) is inherent to one of the said facing (122) and covering (2121).

9. Application of a cushion according to any one of Claims 1 to 8, notably to the squab of the seat of a motor vehicle travelling on land.

10. Application according to Claim 9, characterised in that this seat is mounted so as to move longitudinally in translation, in that the tilting of the movable part (21) in relation to this axis (Δ) is orthogonal to this translation and controlled by this translation.

11. Application according to Claim 10, characterised in that this control is mechanical.

12. Application according to Claim 11, characterised in that this control is electrical.

## Patentansprüche

1. Sitzpolster (10), das eine einstellbare Sitzfläche (13) aufweist und unter anderem aus einem unbeweglichen Teil besteht, und bei dem dieser längsförmige bewegliche Teil (21) schwenkbar entlang einer Achse (Δ) montiert ist, die zu ihm eine Längsachse ist, und einen Überzug (212) mit zumindest einer gekrümmten und zu dieser Achse (Δ) konvexen Außenfläche (2122) aufweist, und bei dem dieser unbewegliche Teil eine Aussparung (22) aufweist, die zumindest teilweise den beweglichen Teil (21) aufnehmen soll, und mit einer gekrümmten und zu der Achse (Δ) konkaven Innenfläche (2211) versehen ist, die zu der Außenfläche (2122) komplementär und gegenüber derselben angeordnet ist, wobei eine Stütze (23) den unbeweglichen Teil und den beweglichen Teil mit zumindest einem Gelenk, das die Achse (Δ) definiert, und Festsetzungsmitteln (24) verbindet, die Reibungsorgane (241) umfassen, um den beweglichen Teil (21) in der Position zu halten, in die er in bezug zu dem unbeweglichen Teil (21) gebracht wurde,
**dadurch gekennzeichnet**, daß der bewegliche Teil (21) teilweise in dieser Aussparung (22) versenkbar ist, daß die Festsetzungsmittel (24) von den gekrümmten Außen- und Innenflächen (2121, 2211), die einander gegenüberliegen, gebildet werden, und daß die Achse (Δ) dermaßen angeordnet ist, daß wenn das Sitzpolster einen Insasssen aufnimmt, die entstandenen Kräfte eine Resultierende aufweisen, die praktisch durch die Achse (Δ) geht.

2. Sitzpolster nach Anspruch 1, bei dem der bewegliche Teil (21) einen Überzug (212) mit Endstreifen (2123) aufweist, die auf der Achse (Δ) senkrecht stehen, und bei dem die Aussparung (22) einen Hohlraum (221) aufweist, der mit Endwänden (2212) versehen ist, die zu diesen Streifen (2123) parallel sind und diesem gegenüberliegen,
**dadurch gekennzeichnet**, daß die Reibungsorgane (241, 2413) ferner auf zumindest einem der gegenüberliegenden Paaren von Wand-Streifen (2123. 2212) angeordnet sind.

3. Sitzpolster nach einem der Ansprüche 1 und 2,
**dadurch gekennzeichnet**, daß die Festsetzungsmittel (24) zusammendrückbare Elemente (242) umfassen.

4. Sitzpolster nach Anspruch 3,
**dadurch gekennzeichnet**, daß die zusammendrückbaren Elemente (242) zumindest zum Teil eine Polsterung (2120) des beweglichen Teils (21) sind.

5. Sitzpolster nach einem der Ansprüche 1 bis 4,
**dadurch gekennzeichnet**, daß zumindest eine Verkleidung (2121) des beweglichen Teils (21) einer elastischen Beanspruchung (213) unterworfen ist.

6. Sitzpolster nach einem der Ansprüche 1 bis 5,
**dadurch gekennzeichnet**, daß ein Bezug (122) des Sitzpolsters (10) und eine Verkleidung (2121) des beweglichen Teils (21) beide einer elastischen Beanspruchung (213) unterworfen sind.

7. Sitzpolster nach einem der Ansprüche 5 und 6,
**dadurch gekennzeichnet**, daß diese elastische Beanspruchung (213) durch ein Spannstück (2131) ausgeübt wird.

8. Sitzpolster nach einem der Ansprüche 6 und 7,
**dadurch gekennzeichnet**, daß die elastische Beanspruchung (213) dem Bezug (122) oder der Verkleidung anhaftet.

9. Anwendung eines Sitzpolsters nach einem der Ansprüche 1 bis 8, insbesondere als Auflage eines Sitzes eines auf dem Land einsetzbaren Kraftfahrzeugs.

10. Anwendung nach Anspruch 9,
**dadurch gekennzeichnet**, daß der Sitz in Längsrichtung in Translation beweglich montiert ist, und daß das Schwenken des beweglichen Teils (21) in bezug auf diese Achse (Δ) orthogonal zu dieser Translation erfolgt und von dieser Translation gesteuert wird.

11. Anwendung nach Anspruch 10,
**dadurch gekennzeichnet**, daß diese Steuerung mechanisch erfolgt.

12. Anwendung nach Anspruch 11,
**dadurch gekennzeichnet**, daß diese Steuerung elektrisch erfolgt.
